# EUROPÄISCHE PATENTSCHRIFT

(11) **EP 0 825 540 B1**
(45) Veröffentlichungstag und Bekanntmachung des Hinweises auf die Patenterteilung: **07.05.2003**
(21) Anmeldenummer: 97114501.6
(22) Anmeldetag: 21.08.1997
(51) Int. Cl.: G06F 9/38, G06F 9/45, G06F 9/302

(54) **Prozessor mit Pipelining-Aufbau**
Pipeline processor
Processeur pipeline

(30) Priorität: 23.08.1996 DE 19634031
(43) Veröffentlichungstag der Anmeldung: 25.02.1998
(73) Patentinhaber: Infineon Technologies AG, 81669 München (DE)
(72) Erfinder: Siemers, Christian, Prof.-Dr., 25746 Heide (DE)
(74) Vertreter: Jannig, Peter, Dipl.-Ing.

(56) Entgegenhaltungen:
- EP-A- 0 417 861
- DE-A- 19 614 991
- US-A- 5 361 373
- FUJITSU SCIENTIFIC & TECHNICAL JOURNAL, Bd. 31, Nr. 2, Dezember 1995, KAWASAKI, JP, Seiten 152-160, XP000555986 SHINTARO SHIMOGORI ET AL: "TP5000: Reconfigurable Hardware Accelerator for CAD Applications"
- PROCEEDINGS OF THE IEEE, Bd. 83, Nr. 12, Dezember 1995, NEW YORK, US, Seiten 1609-1624, XP000550378 J. E. SMITH ET AL: "The Microarchitecture of Superscalar Processors"
- ELECTRONIQUE, Nr. 55, Januar 1996, PARIS, FR, Seiten 98-103, XP000551946 G. LECURIEUX-LAFAYETTE: "UN SEUL FPGA DOPE LE TRAITEMENT D'IMAGES"

## Beschreibung

Die Erfindung betrifft einen Prozessor mit Pipelining-Aufbau, insbesondere mit superskalarer Architektur nach dem Oberbegriff des Hauptanspruchs.

Diese Mikroarchitekturen sollen den höchsten Grad an Parallelität auf Instruktionsniveau in Mikrocomputern realisieren.

Die zentralen Recheneinheiten in Mikrocomputern bestehen hauptsächlich aus dem Prozessor, der im folgenden als einzelstehender Prozessor zu verstehen ist, z. B. als Mikroprozessor, der nicht Bestandteil eines Mikroprozessorsystems ist oder für den diese Zughörigkeit keine Rolle im Sinne einer Instruktionsparallelität spielt.

Diese Prozessoren sind im allgemeinen nach dem von-Neumann-Modell konzipiert. Während dieses Modell für die Trennung von Code- und Datenspeicherbereich im Harvard-Modell aufgehoben wird (dort werden diese Speicher getrennt und mit verschiedenen Zugriffswegen erreicht), gelten sowohl im von-Neumannwie im Harvard-Modell mit ihren vielen Modifikationen und Varianten die strenge Abarbeitungs- und Ergebnissequenzialität des Befehlsflusses. Ausnahmen von diesem Modell bilden die Datenflußrechner, die vom Datenfluß gesteuert arbeiten, also nicht vom Kontroll-Fluß.

Unter Beibehaltung der sequentiellen Bearbeitung des Befehlsstroms hat die Einführung sogenannter RISC-Architekturen, die zunächst nur eine Reduzierung des Instruktionssatzes zur Vereinfachung des Prozessordesigns beinhaltete, eine Heranführung der Geschwindigkeit auf einen Befehl pro Systemtakt des Prozessors erzeugt. Dies wurde durch den Ersatz eines Mikroprogramms im Prozessor durch fest verdrahtete Hardware sowie durch umfangreiche Pipelining-Maßnahmen erreicht. Trotz einer scheinbaren Parallelität innerhalb des Prozessors wurde die maximale Befehlsrate mit einer Instruktion pro Takt und die Bearbeitungs- und die Ergebnissequenzialität erhalten.

Weiter ist zum Stand der Technik die US-Patentschrift 5 361 373 zu nennen, die ein dynamisch konfigurierbares Gate-Array beschreibt, und eine Veröffentlichung 'Highperformance computing using a reconfigurable accelerator' in "CONCURRENCY: Practice and Experience, Vol. 8 (6), 429 443 (July-August 1996)". Letztere beschreibt einen reinen Coprozessor, der eine rekonfigurierbare Arithmetisch-logische Einheit (rALU) umfaßt, die zu Programmbeginn (!) komplett geladen wird, um dann besondere Schleifen eines Programms schnell abzuarbeiten. Dies erfordert einen großen Aufwand beim Compiler. Durch seine komplette Beschreibbarkeit erhält eine solche Recheneinheit wesentlich komplexere Befehle. Eine Neucompilierung ist unumgänglich.

EP-A-0 417 861 beschreibt einen dynamisch rekonfigurierbaren Signalprozessor in Pipelinearchitektur, der zur dynamischen Neukonfiguration/Programmierung während der Laufzeit des Programms mit einer programmierbaren Hardwarestruktur versehen ist.

Die Erfindung hat sich nunmehr die Aufgabe gestellt, eine höhere Parallelität bei der Verarbeitung zu erreichen, wodurch der Mikrocomputer seine Verarbeitungsgeschwindigkeit steigern kann.

Allerneueste Entwicklungen aus dem letzten Jahr im Sektor der Prozessoren erreichen eine Bearbeitungsgeschwindigkeit mit durchschnittlich mehr als einer Instruktion pro Takt. Diese als 'superskalar' bezeichneten Prozessoren, die sowohl als RISC wie auch als CISC-Architektur (Complex Instruction Set Computer) anzutreffen sind, bieten damit ein Maß an Geschwindigkeit, das eine sequentielle Bearbeitungsreihenfolge nicht mehr zuläßt. Durch umfangreiche Maßnahmen im inneren Aufbau der Prozessoren werden mehrere Instruktionen und die damit verbundenen Aktionen parallel zueinander ermöglicht, wobei die Ergebnisse sowie die Unterbrechungsfähigkeit im Sinne einer sequentiellen Bearbeitung sichergestellt werden.

Als Beispiel einer solchen Mikroarchitektur eines superskalaren Prozessors ist die Veröffentlichung "Proceedings of the IEEE", Volume 83, Nr. 12, Dezember 1995 S. 1609-1624, James E. Smith mit dem Titel "The Microarchitecture of Superscalar Processors" zu nennen. Diese Veröffentlichung bietet einen Überblick über das Arbeiten superskalarer Prozessoren.

Ein sich direkt daran anschließendes Paper auf S. 1625 im gleichen Heft der gleichen Zeitschrift "Compiler Technology for Future Microprocessors", Wen-Mai W. Hwu et al, beschreibt die zugehörigen Compiler-Technologien.

Allen Neuentwicklung gemein ist jedoch, daß die Ergebnissicherung, die gleichbedeutend ist mit der Einhaltung der Ergebnissequenzialität, die Erkennung und Auflösung von realen und virtuellen Störungen, sogenannten Hazards, beeinhaltet, die durch die Verarbeitungsparallelität auf Instruktionsebene entstehen. Der einzige reale Hazard besteht dabei in dem "Read-After-Write" (RAW), da ein Wert als Ausgangsbasis für eine Berechnung erst nach einem vorangegangenen Schreiben gelesen werden kann. Eine solche Sequenz kann nicht parallel zueinander bearbeitet werden, während die virtuellen Hazards "Write-After-Read" und "Write-After-Write" durch das sogenannte "Register Renaming" aufhebbar sind.

Die superskalaren Prozessoren können mit Hilfe von speziell konzipierten Assemblerprogrammen sowie einer entsprechenden Compilertechnolgie, die derartig optimierte Programme liefert, in bestmöglicher Ausnutzung ihrer theoretischen Performance betrieben werden.

Gelöst wird die obige Aufgabe, die maximale Befehlsrate zu erhöhen, durch einen Mikroprozessor mit den Merkmalen des Hauptanspruchs. Die Unteransprüche geben vorteilhafte Ausführungsformen wieder.

Insbesondere wird im nachfolgenden ein Mikroprozessor beschrieben, bei dem die Bemühungen der superskalaren Architektur fortgeführt und durch die Einführung einer programmierbaren Struktur -auch als strukturale Programmierung bezeichnetso verbessert sind, daß bei Nutzung der jetzt vorhandenen Technologie eine erhebliche höhere Bearbeitungsgeschwindigkeit erzielt wird. Hierzu wird zunächst die Architektur erläutert, anschließend daraus resultierende Assembler- und Compilermaßnahmen beschrieben und anschließend wird an einigen Beispielen der Geschwindigkeitsgewinn durch die intensive Parallelität der Instruktion zueinander berechnet.

Der zweite Vorteil liegt darin, daß Read-After-Write-Hazards in geeigneter Weise aufgelöst werden können. Read-After-Write bedeutet ja, daß auf ein Ergebnis nach Berechnung zugegriffen werden muß, um den weiteren Rechenfluß aufrechtzuerhalten. Im Fall der im folgenden beschriebenen s-Paradigmen-Unit liegt dieses Ergebnis jedoch vor, bevor es gespeichert wird, und es kann innerhalb der Struktur bereits mit richtigem Wert weiterbenutzt werden. Dies ist gleichbedeutend mit dem Gewinn eines Ausführungstakts, der in der bisherigen Variante zur Speicherung durchlaufen werden müßte.

Die neuartigen strukturellen Maßnahmen in den Vordergrund stellend, wird auch von einem s-Paradigmen-Rechner gesprochen bzw. einem s-Paradigmen-Modell, nach dem der Mikroprozessor arbeitet.

### Beschreibung des s-Paradigmen-Modells

Das s-Paradigmen-Modell kann grundsätzlich auf die ausführende Einheit innerhalb eines beliebigen Prozessors angewendet werden, da es sich ausschließlich in dieser Einheit von dem von-Neumann-Modell unterscheidet und der Kontrollfluß-basierte Ablauf der Befehlsholung, der gerade ein typisches Merkmal des von-Neumann-Modells ist, hiervon unberührt bleibt. Um die Leistungsfähigkeit des Modells jedoch deutlich erscheinen zu lassen, wird im folgenden ohne Beschränkung der Allgemeinheit das s-Paradigmen-Modell im Zusammenhang und im Vergleich mit einem superskalaren Prozessor herkömmlicher Bauart dargestellt. Dabei zeigt :
- Fig. 1: die typische Organisation eines üblichen superskalaren Prozessors,
- Fig. 2: die Mikroarchitektur nach der Erfindung,
- Fig. 3: eine prinzipielle Struktur einer Functional Unit,
- Fig. 4: die Struktur eines Multiplexers,
- Fig. 5: einen Vergleich zweier Codes,
- Fig. 6: eine Datenflußübersetzung für Assemblercode,
- Fig. 7: einen C-Source-Code,
- Fig. 8: einen Assemblercode in 1. Optimierung,
- Fig. 9: einen Kontrollgraph für die Assemblierung,
- Fig. 10: den Assemblercode in 2. Optimierung,
- Fig. 11: den Assemblercode in 3. Optimierung und
- Fig. 12: eine Datenflußübersetzung für dew Assemblercode der Fig. 10.

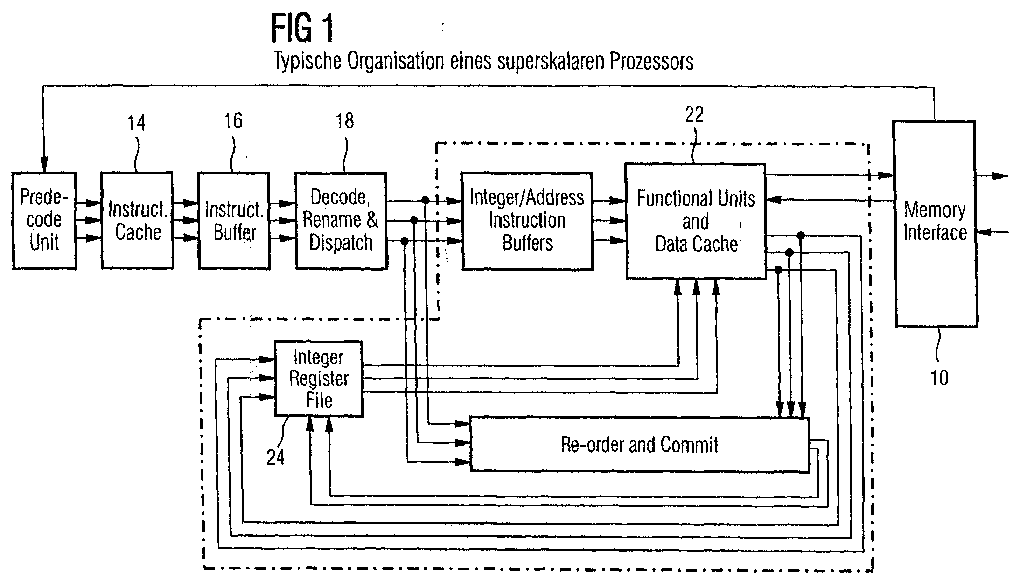

Die Fig. 1 zeigt dabei den Aufbau eines superskalaren Prozessors bei bewußter Fortlassung der Floating-Point-Einheit. Die im folgenden dargestellten Eigenschaften der ausführenden Einheit für den Integer-Teil des Rechners lassen sich auf die Floating-Point-Unit 1:1 übertragen.

Innerhalb des Prozessor werden der Integer-Register-File, die Functional Units und die Re-order-and Commit-Unit durch eine neue Einheit, die s-Unit, ersetzt. Diese Einheit wird im nachfolgenden näher erläutert. Zusätzlich werden in einigen anderen Units Veränderungen nötig, die nachfolgend ebenfalls beschrieben werden. Zunächst soll jedoch eine kurze Erläuterung der Funktionalitäten in Fig. 1 erfolgen.

Das Memory Interface 10 schafft die Verbindung zum externen Code- und Datenspeicherbereich (Hauptspeicher L-2-Cache etc. nicht dargestellt). Auf der Seite der Instruktionen werden diese in einen Instruktions Cache 14 mit einer Vordecodierung abgelegt. Die Vordecodierung ist vorteilhaft, falls zusätzliche Informationen zur schnelleren Bearbeitung für die nachfolgenden Stufen erzeugt werden sollen, sie kann ansonsten fortgelassen werden. Die Instruktionen werden dann im Instruction Cache 14 mit einer Vordecodierung abgelegt. Die Vordecodierung ist vorteilhaft, falls zusätzliche Informationen zur schnelleren Bearbeitung für die nachfolgenden Stufen erzeugt werden sollen; sie kann ansonsten fortgelassen werden. Die Instruktionen werden dann im Instruction Cache 14 als unmittelbaren Speicher vor der Bearbeitung und/oder im Instruction Buffer 16 gespeichert, womit im letzteren Fall sie bereits in der Bearbeitung befindlich sind. Fig. 1 entspricht also dem Stand der Technik.

Die darauf folgende 'Decode, Rename & Dispatch Unit' 18 verteilt innerhalb einer superskalaren Architektur die Befehle auf mehrere ausführende Teileinheiten in einer Functional Unit 22 und ordnet Register aus dem Integer Register File 24 zu. Diese Zuordnung muß aufgrund des Register Renaming erfolgen, um virtuelle Hazards zu vermeiden. Die Functional Units 22 arbeiten ggf. eng mit einem Data Cache zusammen, um die nötigen Operanden laden zu können. Nach der parallelen Ausführung mehrerer Instruktionen müssen die Ergebnisse, in den Registern stehend, neu geordnet oder insbesondere als gültig gekennzeichnet werden (Re-order-and-Commit-Unit).

Abschließend sollte zu dem Modell noch erwähnt werden, daß die Behandlung von bedingten und unbedingten Verzweigungen (Conditional and Non-Conditional Branches) außerhalb des hier dargestellten Teils abläuft. Hierzu werden Maßnahmen z. B. 'Branch Prediction' (Vorhersage) mit einer probeweisen Ausführung vorgesehen, die bei Nichterfüllung zu Verzögerungen führen.

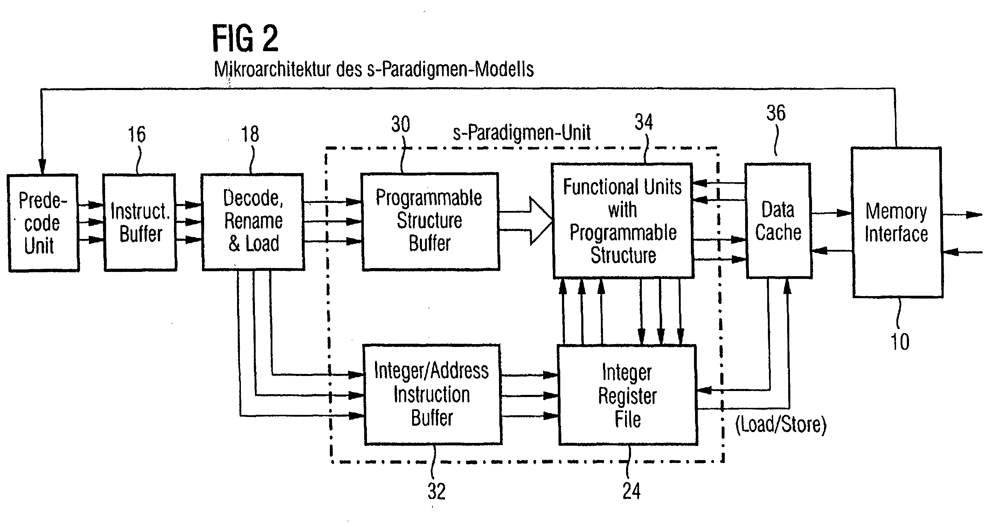

Die in der Fig. 1 grau hinterlegten, jedoch im Stand der Technik auf diese Art und Weise vorgesehenen Blöcke werden nun, wie in der Fig. 2 dargestellt, nach der Erfindung entsprechend anders aufgebaut.

Wie dargestellt, werden eine Programmable Structure Buffer 30, ein Integer/Address Instruction Buffer 32 und eine Einheit mit Functional Units with Programmable Structure 34 neben dem Integer Register File 24 vorgesehen.

Das s-Paradigmen-Modell kennt dabei vier Klassen von Maschinenbefehlen:
- Branch- und Jump-Befehle zur Kontrollflußsteuerung,
- Load-/Store-Befehle zum Datentransfer zwischen Registern und Speicherbereich,
- Arithmetische und logische Befehle zur Berechnung, und
- sonstige Befehle wie No Operation, Wait, Stop, etc., die im weitesten Sinne auch der Kontrollflußsteuerung dienen.

Während die Befehlsklassen zur Kontrollflußsteuerung wie bisher belassen und damit entsprechend dem Standard in superskalaren Rechnern ausgeführt werden, nehmen die Load/Store-Befehle und die arithmetisch/logischen Befehle eine neue Stellung ein.

Load/Store-Befehle werden entweder mit Hilfe einer oder mehrerer Load/Store-Pipeline(s) zum Datentransfer zwischen dem Integer Register File 24 und dem Datenspeicher (Cache 36, Hauptspeicher) eingesetzt und dann auch wie bisher bearbeitet oder sie werden zu den arithmetisch/logischen Befehlen hinzugefügt und in das nun beschriebene Kernstück des s-Paradigmen-Modells integriert. Die Entscheidung hierüber obliegt dem Systemdesigner der CPU. Move-Befehle hingegen, die einen Datentransfer zwischen den Registern des Prozessors bewirken, gehören grundsätzlich zu diesem Modell.

Die arithmetisch/logischen Befehle (und die hinzugeführten Load/Store-Befehle) werden ihrer Programmiersequenz zufolge in eine Struktur von aufeinanderfolgenden Hardwareverknüpfungen übersetzt. Zu diesem Zweck bietet die Functional Unit im erfindungsgemäßen Mikrocomputer eine programmierbare Struktur und feste verdrahtete arithmetisch/logische Verknüpfungen (sowie ggf. Zugriffsfunktionen wie Load/Store-Pipelines) an, die durch die Struktur miteinander verknüpft werden können und in der Reihenfolge der Strukturierung bearbeitet werden.

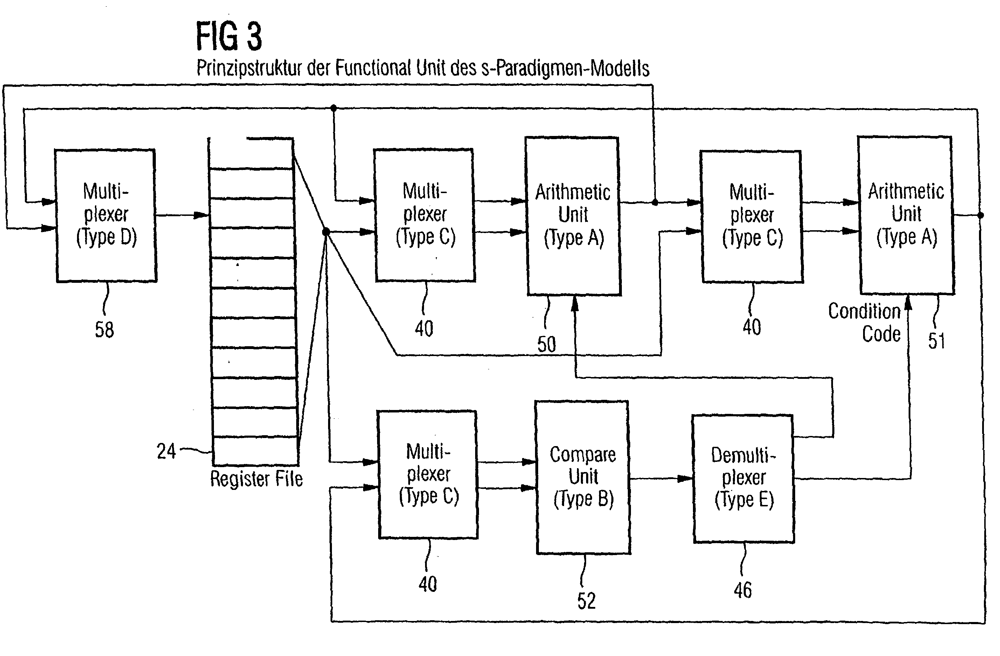

Die entsprechende Funktionalität wird in der Fig. 3 erläutert. Dort werden die Teileinheiten der Functional Unit 22 und das Register File 24 (in der Fig. 3 grau hinterlegt) durch eine Vielzahl von Datenverbindungen und Multiplexern 40 verbunden. Die Datenverbindungen sind dabei als Busse mit der jeweiligen internen Datenbusbreite ausgeführt (z. B. 32 Bit), eine Ausnahme bilden die Condition Codes, die als Bit-Leitungen (gepunktet gezeichnet) implementiert sind. Innerhalb der Funtional Unit existieren fünf Typen von Teileinheiten:
- Die Arithmetic Unit (AU, Typ A) 50; 51, die nicht mit der herkömmlichen Arithmetical Logical Unit (ALU) verwechselt werden sollte. Die AU 50; 51 enthält eine oder wenige, dann konfigurierbare Verknüpfungen, beispielsweise die Möglichkeit, zwei Integerzahlen zu addieren. Sie liefert ein Ergebnis an ihrem Ausgang, wenn die Eingänge entsprechend beschaltet werden und dieses Ergebnis kann innerhalb des Schaltnetzes weiter verwendet werden. Die AU 50; 51 ist gekennzeichnet durch zwei Eingangsbusse und einen Ausgangsbus, ggf. durch eine Konfigurationsmöglichkeit (Auswahl der Verknüpfung, im Extremfall entsprechend einer ALU) und durch Konditionalbits. In einigen Fällen, beispielsweise bei der Multiplikation kann die Breite des Ausgangsbusses abweichen, um die Berechnungen zu ermöglichen.
- Eine Compare Unit (CoU, Typ B) 52, die ebenfalls einem Multiplexer nachgeschaltet ist. Für die bedingte Ausführung der Verknüpfung werden hier Condition Code Bits durch einen konfigurierbaren Vergleich in der CoU 52 erzeugt. Der Vergleich läßt sich bei Verwendung von drei Konfigurationsbits auf >,>=,<,<=,!=,==,TRUE oder FALSE einstellen. Kennzeichen der CoU sind zwei Eingangsbusse und ein Ausgangsbit sowie die Konfigurierbarkeit.
- Multiplexer (MulC, Typ C) 40, belegen die Eingänge der AUs und der CoUs mit jeweils zwei Eingangswerten in der vollen Verarbeitungsbreite. Hierfür benötigen Sie eine Anzahl von Konfigurierungsbits, die sich aus der Anzahl von Eingängen und den zwei Ausgängen ergeben. Kennzeichen für MulC-Einheiten sind zwei Ausgangsbusse.
- Weiter sind Multiplexer (MulD, Typ D) 58 zu nennen, die vor dem Registerfile 24 vorgesehen sind. Für die Belegung der Register mit den Ergebniswerten wird lediglich ein Ausgangsbus und damit auch nur die Hälfte der Konfigurationsbits benötigt. Ein MulD unterscheidet sich daher vom MulC durch die Anzahl seiner Ausgangsleitungen.
- Letzlich sind noch die Demultiplexer (Demul, Typ E) 46 zu nennen, die die Ergebnisse der Vergleiche (CoU) an entsprechende AU's weiterleiten. Im Gegensatz zu den Multiplexern 58, die eine Quellenauswahl vornehmen, liegt hier eine Zielauswahl vor.

Die Verbindungen zwischen den Teileinheiten können komplett oder teilweise ausgeführt sein, abhängig von der Anzahl der zur Verfügung stehenden Konfigurationsbits in der Gesamtheit. In einer Beispielarchitektur im nächsten Abschnitt wird eine vollständige Verbindbarkeit gezeigt sowie die Zahl der notwendigen Bits daraus berechnet.

Der Sinn der strukturierbaren Functional Unit, nach der Erfindung liegt nun darin, die Struktur entsprechend den Maschinenbefehlen in einem (Basis- oder Super) Block eines Programms anzupassen. anzupassen. Derartige Blöcke sind dadurch gekennzeichnet, daß sie ohne (Basisblock) bzw. nur mit selten genutzten (Superblock) Verzweigungen (Branch-Befehle) auskommen, also im Kontrollfluß deterministisch oder wenigstens mit hoher Wahrscheinlichkeit bestimmbar sind. Auf die Problematik dieser Blocks und ihre Blocks und Auswirkungen auf Assembler- und Compilertechnologie wird im übernächsten Abschnitt "Konsequenzen ..." näher eingegangen.

Die Programmierung erfolgt im s-Paradigmenmodell durch das Laden von Konfigurationsbits für die Teileinheiten. Diese werden im Programmable Structure Buffer zwischengespeichert und bei Bearbeitung des Blocks in die s-Unit S geladen, die dadurch entsprechend strukturiert ist und den Block bearbeiten kann. Die Bearbeitung bezieht sich dabei lediglich auf die arithmetische und logischen Verknüpfungen zwischen Registerinhalten, ggf. auch mit Speicherinhalten (falls eine entsprechende Load/Store-Pipeline zur Verfügung steht), während alle anderen Befehle, insbesondere Load/Store und Kontrollflußbefehle wie üblich ablaufen.

Die Generierung der Konfigurationsbits kann entweder im Assembler erfolgen (Compiletime basierte Generierung), es ist aber auch prinzipiell möglich, sie in der CPU, etwa durch einen funktionell erweiterten Programmable Structure Buffer zur Laufzeit erzeugen zu lassen (Runtime-basierte Generierung).

### Realisierungsformen der Execute-Einheit des erfindungsgemäßen Mikrocomputers

Die Struktur der s-Unit S mit festverdrahteten AUs 50; 51 sowie CoUs 52 und konfigurierbaren Wegen zwischen diesen Teileinheiten legt zunächst fest, daß die Multiplexer das programmierbare Element dieser Konfiguration darstellen. Die feste Verdrahtung insbesondere der AU's 50; 51 wurde gewählt, um die Anzahl der zu ladenen Bits möglichst gering zu halten. In einer weiteren Stufe der Flexibilisierung könnten auch die AUs 50; 51 programmierbar sein, d. h. auf einfachen Strukturen wie NAND-Gattern oder Disjunktiven Normalformen (DNF) aufbauend realisiert sein. Damit wäre eine nahezu beliebige Funktionalität bereits in einer AU 50; 51 integrierbar.

Arithmetic Units 50; 51 beinhalten beispielsweise folgende Funktionalitäten:
- Arithmetische Verknüpfungen wie Addition, Subtraktion, Multiplikation, Division,
- Logische Verknüpfungen wie AND, OR, XOR, NOT, Komplement (Zweier-),
- Shift-Funktionen wie arithmetische oder logische Shifts nach rechts/links,
- Bedingte Datentransfers, abhängig von Eingangsbits (2 Wege-Multiplexer, im Unterschied zu den MulC und MulD-Teileinheiten zur Laufzeit umschaltbar).

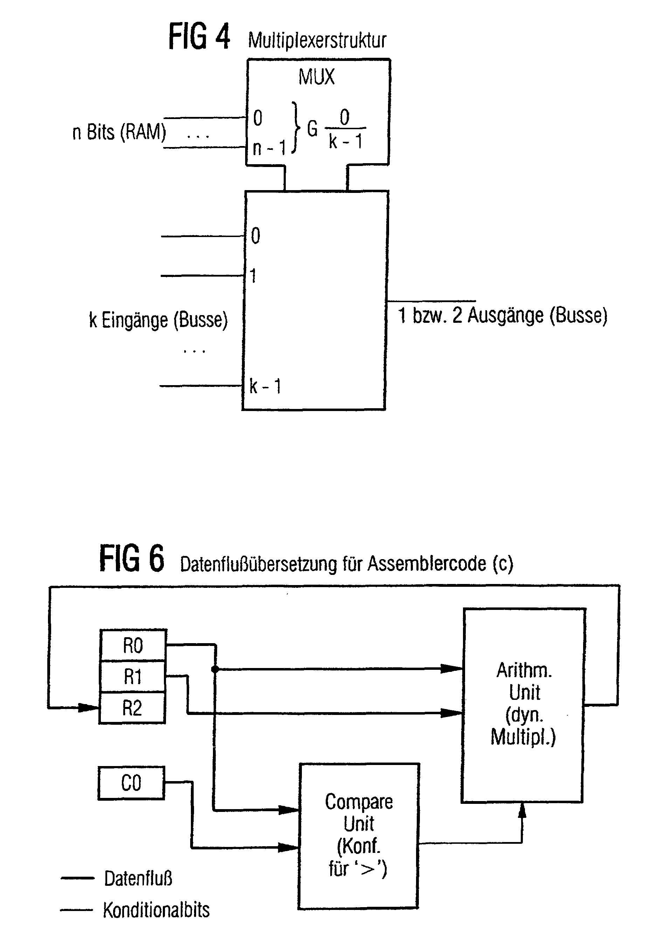

Die Basis für die Programmierung der Struktur, also der beiden Multiplexertypen, besteht in RAM-Zellen. Hiermit ist eine sehr schnelle Konfigurierung gewährleistet, während andere Technologien wie EEPROM längere Zeit benötigen und eher für den Einsatz von programmierbaren AU's denkbar wären. Mit Hilfe von n Bits können dann 2ⁿ Wege geschaltet werden, so daß für einen MulC bei 32 Eingängen 2 x 5 Bits, für einen MulD 5 Bits zur Konfigurierung notwendig wären. Die prinzipielle Struktur dieser Multiplexer ist in der Fig. 4 dargestellt.

In einer möglichen konkreten Modellarchitektur sind dann folgende Teileinheiten und Register implementiert:
- vier Addierer (AU), bei denen durch ein Condition Code-Bit die Addition durchgeführt wird (TRUE) oder das erste Wort unverändert durchgelassen wird (FALSE),
- eine logische Einheit mit AND, OR, XOR und Zweier-Komplementbildung, konfigurierbar durch 2 Bits (AU),
- ein Multiplizierer (AU),
- ein Dividierer (AU),
- eine Shift-Funktionseinheit (AU), die mit Hilfe von zwei Bits auf links/rechts und arithmetisch/logisch konfiguriert wird,
- zwei dynamische Pfad-Multiplexer, die durch ein Bit im Steuereingang einen der beiden Eingangsbusse am Ausgang anliegen lassen (AU). Diese Multiplexer sollten nicht mit den Multiplexer Typ C oder D verwechselt werden, da die hier vorgeschlagene Teileinheit die Auswahl dynamisch schaltet,
- sechs Vergleichseinheiten mit je einem Bitausgang konfigurierbar über drei Bits auf acht Vergleichsarten (CoU) 52,
- zwölf logische Register R0 bis R11, die in einem Pool von beispielsweise 24 physikalischen Registern per Register Renaming identifiziert werden,
- vier Konstantenregister C0 bis C3, in denen die im Instructioncode codierten Konstanten während der Bearbeitung eines Blocks gespeichert werden.

Dies ergibt eine Gesamtheit von 32 zu verbindenen Teilen innerhalb der s-Unit S. Wird eine vollständige Verbindbarkeit gefordert, müssen die Multiplexer im wesentlichen mit fünf bzw. 2 x 5 Bits konfiguriert werden. Zur Verbindung aller Einheiten werden 10 Multiplexer Typ C, 12 vom Typ D und 6 Demultiplexer vom Typ E benötigt. Da angenommen wird, daß die Konditionierung durch Vergleichsoperationen sich nur auf AUs bezieht, benötigen die Demultiplexer nur drei Bits zur Konfiguration. Damit ergibt sich die Gesamtzahl der Konfigurationsbits (für Multiplexer und konfigurierbare AUs) zu 200 Bits.

Das Modell kann zudem auf die Behandlung von Flags ausgedehnt werden, dies ist durch gesonderte AUs mit Auswerteeigenschaften möglich. Um einen Überlauf bei arithmetischen Operationen zu verhindern bzw. zu detektieren, sind genügend dimensionierte Datenbusse und entsprechende Auswerteeinheiten notwendig, die aus Übersichtsgründen fortgelassen werden.

### Konsequenzen des s-Paradigmen-Modells für Maschinenbefehle, Assemblerprogrammierung und Compilerbau

Der erfindungsgemäße Mikrocomputer arbeitet sehr ähnlich zu superskalaren Architekturen, die auf der parallelen Instantiierung von ALUs basieren. Wichtig für die optimale Ausnutzung dieser Architektur ist die möglichst große Blockbildung im Rahmen der Assemblercodierung.

Hier wird als Basisblock eine Folge von Instruktionen verstanden, die keine Verzweigung durch beispielsweise einen bedingten Branchbefehl beinhalten. Derartige Basisblöcke sind bei herkömmlichen Compilertechnologien eher relativ kurz, so daß die Ausnutzung der internen Parallelität gering bleibt.

Derzeit sind mehrere Compilerstrategien in der Entwicklung, wie die obengenannte Veröffentlichung Smith zeigt, die eine verbesserte Nutzung versprechen. Eine Methodik besteht in der Generierung von Superblocks, die im Regelfall einer Schleife durchlaufen werden und die im Zusammenhang mit dieser Arbeit ebenfalls als geeignete Blocks angesehen werden. Wesentlich interessanter ist die Einführung von konditionierten Befehlen, die anhand eines Entscheidungsbits ausgeführt oder übersprungen werden. Dieses Entscheidungsbit kann durch Vergleiche entstehen und ist dann kontrollflußbestimmend, also auch unter Randbedingungen Branch ersetzend wirksam.

Ein Beispiel zum Einsatz solcher konditionierten Befehlsausführungen, die "predicated execution" kann durch die in der Fig. 5 dargestellte Sequenz in C und Assembler (Befehlsbedeutung vergl. Anhang A) gegeben werden.

Dieses Beispiel wird für eine Pseudo-CPU gezeigt, die in herkömmlicher Weise bei relativ optimaler Ausnutzung von Registern eine bedingte Wertzuweisung übersetzt. Der hierbei auftretende Sprungbefehl ble (branch if less or equal) bedeutet jedoch ggf. eine Verzweigung im Kontrollfluß, was bei der Implementierung und Nutzung bedingter Befehlsausführung nicht notwendig ist. Hier wird ein Bit im Register p1 gesetzt, falls r0 > 0 gilt, ansonsten gelöscht und die bedingten movp-Befehle beziehen sich auf p1 und schließen sich gegenseitig aus, so daß dies gut in nebenläufige Hardware umzusetzen ist, bei der nur ein Pfad aktiv sein darf.

Das kurze Beispiel kann dabei keineswegs als Beweis für die Beschleunigung durch konditionierte Befehle gesehen werden; umfangreiche Arbeiten wie die von Smith (o.a.) haben jedoch ergeben, daß diese Maschinenbefehle sich außerordentlich günstig für den Fluß innerhalb einer Execute-Einheit von super skalaren Mikroprozessoren auswirken. Die Umsetzung in Hardware kann durch die dynamischen Multiplexer in Verbindung mit den Vergleichern erfolgen, wie in Fig. 6 anhand der Datenflußübersetzung für Assemblercode dargestellt ist.

Die Übersetzung erfolgt durch Zuordnung eines Vergleichers 60, der für "größer-als" konditioniert ist, und eines dynamischen Multiplexers 62, der die Auswahl aus den beiden einfließenden Datenströmen anhand des Vergleichsbild vornimmt, zu diesem Ausführungsblock. Die Load/Store-Befehle verbleiben in der bisherigen Form und sind nicht dargestellt. Zusätzlich muß das Register C0 (für Konstanten) mit dem Vergleichswert, hier "0" geladen werden.

Für den Maschinenbefehlssatz des erfindungsgemäßen Mikrocomputers sind dann zusätzlich folgende Befehle angenommen:
PEQ <Dest>, <Source>, <Zielbit> (Gleichheit)
PNE <Dest>, <Source>, <Zielbit> (Ungleichheit)
PGE <Dest>, <Source>, <Zielbit> (größer oder gleich)
PGT <Dest>, <Source>, <Zielbit> (größer als)
PLE <Dest>, <Source>, <Zielbit> (kleiner oder gl.)
PLT <Dest>, <Source>, <Zielbit> (kleiner als)

Eine Erweiterung dieses Befehlssatzes für Setzen von Konditionsbits ist natürlich denkbar. Daneben müssen diese Konditionsbits auswertbar sein, was durch die Einführung von bedingten Verschiebe und arithmetisch/logischen Befehlen erfolgen kann. Im folgenden wird für die Modellarchitektur des erfindungsgemäßen Mikrocomputers daher vorausgesetzt, daß alle Verschiebebefehle mit einer Kondition belegbar sind (movp) und daß die arithmetisch/logischen Befehle so ausgeführt werden, daß der 1. Verknüpfungsoperand durchgelassen wird, falls die Bedingung nicht erfüllt ist. Im Fall der
addp <Ziel>, <Operand_1>, <Operand_2>, <Prediction-bit>

Verknüpfung wird also <Operand_1> in das Zielregister geladen, falls das <Prediction_bit> gelöscht ist, ansonsten die Summe von <Operand_1> und <Operand_2>.

Die weiteren Methoden zur Steigerung des Durchsatzes in dem erfindungsgemäßen Mikrocomputer entsprechen denen für super skalare Mikroprozessoren. Hierzu zählen bezüglich der Programmierung in Assembler bzw. C (als Beispiel für eine Hochsprache):
- Nutzung der bedingten Ausführung von Befehlen zur Schaffung von größeren Blöcken ohne Kontrollflußstrukturen,
- Unrolling von Schleifen bis zum Maximum der Ressourcen,
- Abhängigkeitsanalyse und Beseitigung von Abhängigkeiten durch (Compile-Time-) Register Renaming.

Nachdem dies zu einem Optimum für eine superskalare Architektur geführt wurde, werden die vorhandenen Blöcke erneut analysiert und in die strukturale Programmierung übersetzt. Diese Übersetzung kann zur Compilezeit erfolgen, wobei der Vorteil in der intensiven Analyse ohne Benutzung von Silizium im Zielsystem zu sehen ist. Die strukturale Programmierung wird dabei durch die vorhandene Abhängigkeitsanalyse und vor allem die Beseitigung erheblich unterstützt, so daß die Befehle in Datenflüsse und damit in die Struktur umsetzbar sind. Diese Struktur besitzt dann keine Zyklen oder Rückkopplungen, die für die Hardwarestrukturierung bei asynchronem Design unbrauchbar wäre.

Der Performancegewinn ergibt sich aus der Ausnutzung zweier Vorteile gegenüber einer "klassischen" Architektur eines superskalaren Mikroprozessors. Die ALU, die innerhalb der bisherigen Architektur vervielfacht wird, wird nunmehr aufgespalten, so daß die Einzelteile unabhängig voneinander nutzbar sind. Unter der Annahme, daß die Laufzeit innerhalb der programmierbaren Struktur so klein bleibt, daß die Ergebnisse unabhängig von dem Datenflußweg innerhalb eines Takts vorliegen, ergibt dies eine im Schnitt bessere Ausnutzung und kleinere Ausführungszeiten.

Die Steuerung bzw. Bestimmung der Ausführungszeit innerhalb der s-Unit nimmt jedoch einen zentralen Punkt in der Hardwareimplementierung ein. Folgende Verfahren bieten sich hierzu an:
- Die struktural programmierbares-Unit wird so konzipiert und mit dem maximal zulässigen Takt abgestimmt, daß die Laufzeit innerhalb der s-Unit für jeden Fall so dimensioniert ist, daß das Ergebnis nach einem Takt in den Registern speicherbar ist.
- Die Hardware, die in jedem Fall asynchron miteinander verknüpft ist (eine Synchronisierung erfolgt in jedem Fall erst bei den Registern, weshalb auch eine Abhängigkeitsbeseitigung notwendig ist), liefert beim Durchlauf ein Ready-Signal mit, das die Übernahme in die Register steuert. Diese Form läßt ggf. höhere Taktraten zu, wobei z. B. im Regelfall ein Takt zum Durchlauf benötigt wird und in Ausnahmefällen zwei Takte.

Weiter soll im folgenden ein Beispielprogramm analysiert, übersetzt und für eine superskalare Architektur optimiert werden. Die Geschwindigkeiten im Ablauf dieses Maschinenprogramms werden dann im Vergleich zum erfindungsgemäßen Mikrocomputer dargestellt. Dieses Beispiel stammt aus der oben genannten Veröffentlichung von J. Smith, um die Ergebnisse entsprechend vergleichbar gestalten zu können.

### Beispielprogramm

Das Zusammenwirken von Compilertechnologie und Möglichkeiten zur Parallelisierung durch die strukturale Programmierung der Hardware können an einer einfachen C-Schleife demonstriert werden. Für die Codegenerierung wird dabei einerseits ein superskalarer Mikroprozessor zugrundegelegt, der mindestens 12 Register, bedingte Anweisungen und zwei nebenläufige ALUs, beide ausgestattet mit allen Fähigkeiten, besitzt, andererseits wird das oben vorgestellte Modell einer S-Unit genutzt. Bei diesem Vorgang werden folgende Schritte durchlaufen:
1. Der C-Sourcecode wird mit Hilfe eines Compilers, der für nichtsuperskalare Architekturen optimiert, übersetzt.
2. Die Blockgröße wird durch den Ersatz von bedingten Sprüngen durch bedingte Anweisungen erhöht.
3. Je zwei Schleifen werden zu einer größeren Schleife zusammengefaßt (Loop Unrolling).
4. Für die gewonnene Schleife wird ein (Compile Time) Register Renaming mit Hilfe einer Abhängigkeitsanalyse durchgeführt.

Für alle Stufen der Optimierung wird der Grad der Parallelisierung bzw. die Anzahl der benötigten Takte angegeben, für die höchste Stufe im Vergleich zwischen einer superskalaren Architektur bisheriger Bauart und einem erfindungsgemäßen Mikrocomputer.

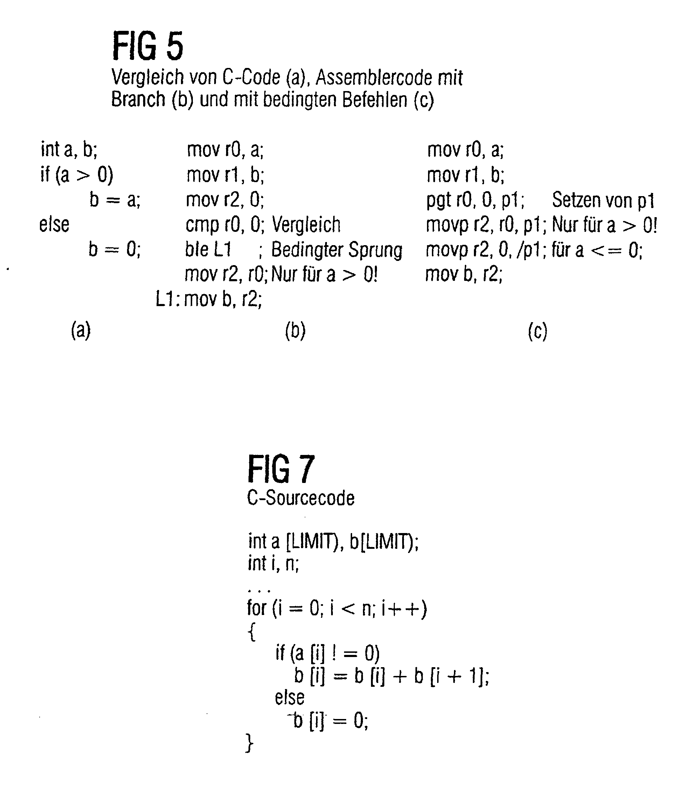

In der Fig. 7 ist der C-Sourcecode dargestellt. Das Programm besteht in einer Zuweisungsschleife an ein Array b[] in Abhängigkeit eines Arrays a[], wobei hier besonders die Read-After-Write-Abhängigkeiten zu analysieren sind.

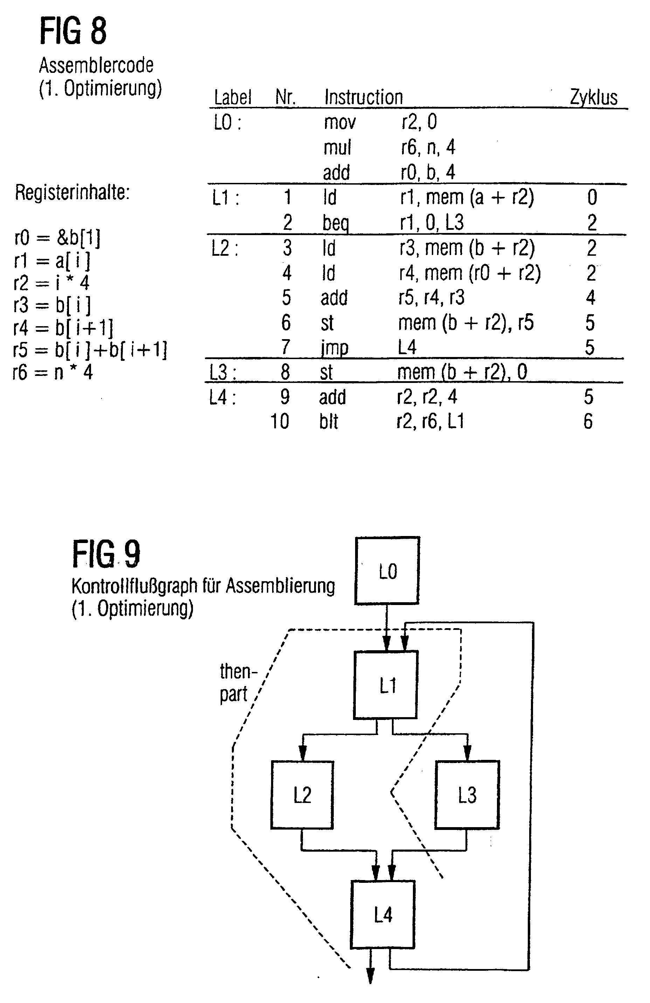

Das Interessante an diesem Code ist die Reihenfolge der Adressen, auf die jeweils zugegriffen wird, da die Zuweisung in einem Teil der Schleife b[i] + b[i+1] lautet und somit das zweite Element des 1. Zugriffs gleich dem ersten Element der zweiten Schleife ist. Die Übersetzung des C-Sourcecodes mit einem optimierenden Compiler, ausgelegt für traditionelle Architekturen, ergibt dann das in der Fig. 8 dargestellte Assemblerlisting.

Der Kontrollflußgraph, wie er in der Fig. 9 dargestellt ist, zeigt die Wege, auf denen dieser Code durchlaufen wird. Der Compiler selbst hat den Assemblercode so optimiert, daß einige Basisblocks entstehen (in Abb. 8 durch Linien getrennt). Die aufeinanderfolgenden Instruktionen 1 und 2 bedeuten beispielsweise, daß hier ein Read-After-Write-Hazard vorliegt: r1 wird zuerst beschrieben und dann erst danach zum Vergleich mit 0 gelesen werden. Die Abhängigkeit bewirkt, daß keine parallele Ausführung möglich ist. Die Spalte für den aktuellen Zyklus bezieht sich auf eine superskalare Architektur, die prinzipiell parallele Aktionen durchführen kann. Die Berechnung einer Schleife dauert im Maximalfall 6 Zyklen (bei angenommenen 2 Zyklen für einen Datentransfer zum Hauptspeicher), so daß für den then-Part bei 9 durchlaufenen Instruktionen 1,5 Instr./Zyklus ausgeführt werden.

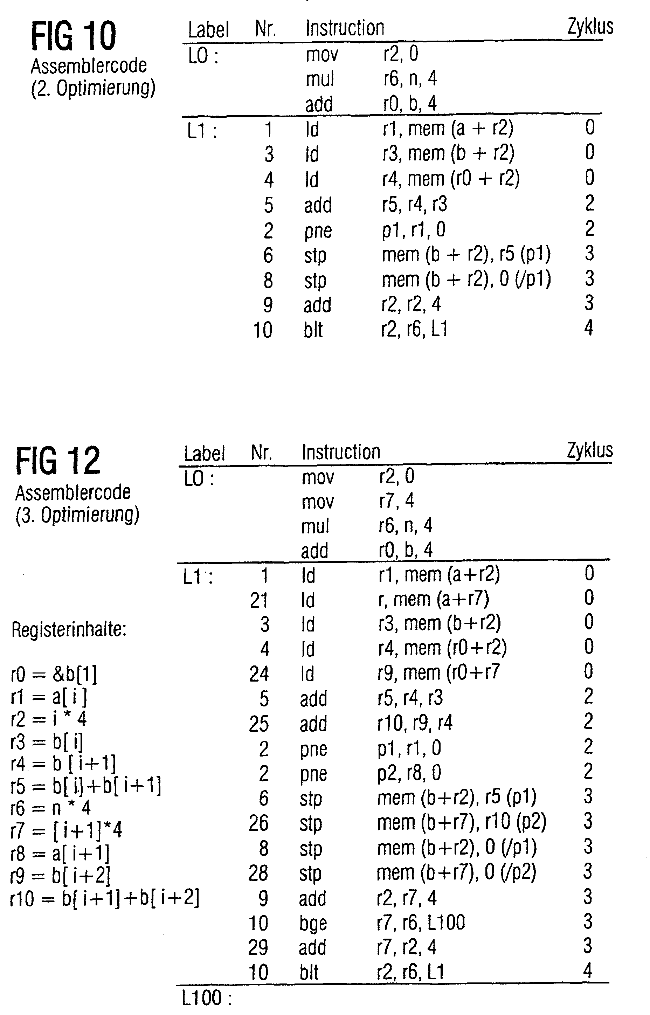

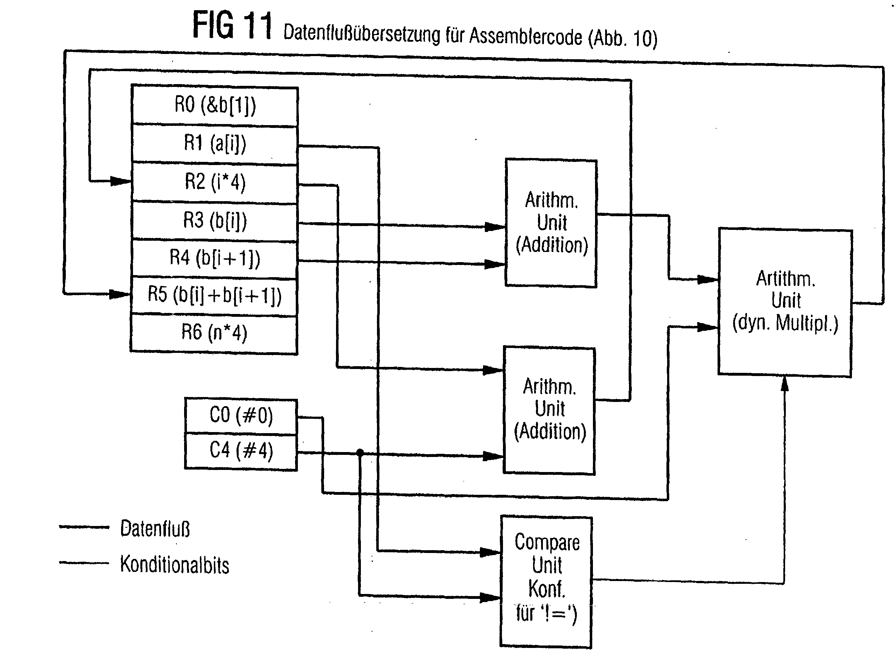

Durch eine 1:1-Kopie des Blocks L4 für den else-Part, eine Veränderung der Reihenfolge der Anweisungen und den Ersatz der bedingten Verzweigung durch die bedingte Ausführung der Speicherbefehle kann eine Vergrößerung des Basisblocks erreicht werden. Das zugehörige Assemblerlisting (Fig. 10) zeigt eine Beschleunigung einer Schleife auf 4 Zyklen (bei der Annahme, daß die letzte Verzweigung richtig vorhergesagt wird).

Der Durchsatz pro Schleife vergrößert sich für eine superskalare Architektur durch diese Maßnahmen auf 2 Instr./Takt. Nimmt man nun an daß die s-Paradigmen-Unit S ein beliebiges Schaltnetz in einem Takt bearbeiten kann, dann benötigt die Implementierung im erfindungsgemäßen Mikrocomputer hingegen für alle Berechnungen einschließlich der bedingten Wertzuweisung einen Takt, der Durchlauf pro Schleife verkürzt sich auf 3 Takte, der Durchsatz beträgt 2,66 Instr./Takt.

Die Fig. 11 zeigt die Struktur einer S-Unit S. Die Load/Store-Befehle, die der Kommunikation mit dem externen Speicher dienen, müssen ebenfalls arithmetische Berechnung für die effektive Adresse vornehmen. Diese sind hier nicht gezeichnet, obwohl prinzipiell auch Addierer aus der S-Unit für die Adressenaddition nutzbar wären.

Die letzte Stufe der hier gezeigten Optimierungen behandelt die Verbesserung der Performance durch ein Zusammenfassen zweier Schleifendurchläufe zu einem (Loop Unrolling) mit nachfolgender Abhängigkeitsanalyse und -behebung. Diese Optimierung steigert den Durchsatz, falls eine unabhängige, parallele Bearbeitung beider Teilschleifen möglich ist. Daher verwendet diese Methode zur Beseitigung von Abhängigkeiten ein Compile-Time Register Renaming.

In der Fig. 12 ist das Ergebnis nach der Optimierung [1] dargestellt.

Durch die parallele Bearbeitung zweier Schleifen sinkt die Bearbeitungszeit auf durchschnittlich 2 Takte pro (ehemaliger) einfacher Schleife, wobei als Parallelisierungsmaß nunmehr 3,75 Instr./Takt ausgeführt werden. Dies gilt für die superskalare Architektur, während durch den erfindungsgemäßen Mikrocomputer im konkreten Modell des Abschnitts (oben unter der Überschrift Realisierungsform der Execute-Einheit des erfindungsgemäßen Mikrocomputers beschrieben) eine weitere Steigerung vorgebracht wird.

Abgesehen von den Adreßberechnungen werden vier Additionen in einer Doppelschleife sowie zwei bedingte Zuweisungen gefordert. Diese Ressourcen sind im Modell vorhanden, das seinerseits mit Additionskapazitäten speziell für Schleifendurchführungen ausgestattet wurde. Damit läßt sich der gesamte Block der Additionen und Wertzuweisungen in einem Takt ausführen, wiederum unter Annahme, daß das Schaltnetz dies stabil während des Takts durchlaufen läßt. Die durchschnittliche Bearbeitungszeit pro einfacher Schleife liegt dann bei 3 Takten, dies ergibt eine Rate von 5 Instr./Takt.

Insgesamt ist damit erstmalig die strukturale Programmierung in das zentrale Bearbeitungselement der prozeduralen Programme, die CPU eingeführt. Unter Beschränkung auf eine Neukonzeption der ausführenden Einheit wurde ein konkretes Modell mit beschränkten Ressourcen entworfen, wobei gezeigt wurde, daß dieses Modell im Vergleich zu bisherigen superskalaren Architekturen eine deutlich verbesserte Performance bietet. Die Bearbeitungszeiten wurden in den Beispielen um 25-33 % verkürzt.

## Patentansprüche

1. Prozessor mit Pipelining-Aufbau, insbesondere mit superskalarer Architektur, mit einem Instruktionsspeicher (16), einer Dekodiereinheit (18), einem Integer/Address Instruction Buffer (32), und einem Integer-Register-File (24) zur direkten Kommunikation mit datenspeichernden Interfacemitteln (36),
**gekennzeichnet durch**
- eine Functional Unit mit programmierbarer Struktur (34), mit
- einer Mehrzahl von Arithmetic-Units (50,51) zur arithmetischen und/oder logischen Verknüpfung zweier Operanden auf zwei Eingangsbussen zu einem Ergebnis auf einem Ausgangsbus,
- einer Mehrzahl von Compare-Units (52) mit zwei Eingangsbussen und einem Ausgangsbit,
- einer Mehrzahl von Multiplexern (40, 58) mit einer Mehrzahl von Eingangsbussen und ein oder zwei Ausgangsbussen, die zwischen den Arithmetic-Units (50, 51), den Compare-Units (52), und dem Register-File (24) vorgesehen sind, sowie
- einer Mehrzahl von Demultiplexern (46) mit einem Eingangsbit und einer Mehrzahl von Ausgangsbits, zur Lieferung des Ergebnisses der Vergleiche (CoU) in einer Zielauswahl an entsprechende Arithmetic-Units (50, 51),
- eine das Integer-Register-File (24) und die Functional Unit mit programmierbarer Struktur (34) enthaltende, zur Verknüpfung der Inhalte des Integer-Register-Files (24) und der Functional Unit mit programmierbarer Struktur (34) ausgeführte, multiplexgesteuerte s-Paradigmen Unit (s-Unit) (30, 34, 32, 24), mit einer Vielzahl von **durch** Multiplexern verbundenen Datenverbindungen, wobei die s-Unit (30, 34, 32, 24) zur dynamischen Neukonfiguration/Programmierung während der Laufzeit des Programms mit einer programmierbaren Hardwarestruktur versehen ist, und
- einen Programmable Structure Buffer (30) zur Zwischenspeicherung von Konfigurationsbits für die s-Unit (30, 34, 32, 24).

2. Prozessor nach Anspruch 1,
**gekennzeichnet durch**
ein Floating Point Register File mit entsprechenden Verknüpfungen als oder zusätzlich zum Register File (24).

3. Prozessor nach einem der vorhergehenden Ansprüche,
**dadurch gekennzeichnet,**
**daß** die Arithmetic Units (50, 51) und Compare Units (52) während des Programmlaufs dynamisch für jeweils einen Block von Befehlen in ihrer Funktionalität konfigurierbar und programmierbar sind.

4. Verfahren zur Hochgeschwindigkeitsrechnung mit Pipelining-Prozessoren nach einem der vorhergehenden Ansprüche,
**dadurch gekennzeichnet , daß**
- für die s-Unit (30, 34, 32, 24) nach möglichst großer Blockbildung im Rahmen der Assemblercodierung und Einführung von konditionierten Befehlen, die abhängig von Entscheidungsbits ausgeführt oder übersprungen werden, Konfigurationsbits erzeugt werden,
- die Konfigurationsbits für die Teileinheiten der Functional Unit mit programmierbarer Struktur (34) zwischengespeichert werden, und bei der Bearbeitung des Blocks in die s-Unit (30, 34, 32, 24) geladen werden,
wobei die Entscheidungsbits durch Vergleiche kontrollflußbestimmend festgelegt werden, so daß dann, wenn eine Arithmetic Unit (50, 51) als dynamischer Multiplexer verwendet wird, in Verbindung mit den Compare-Units (52) eine optimale Datenflußübersetzung erzeugt wird.

## Claims

1. Processor with a pipelining structure, in particular with a superscalar architecture, having an an instruction store (16), a decoder unit (18), an integer/address instruction buffer (32) and an integer register file (24) for direct communication with data-storing interface means (36),
**characterized by**
- a functional unit with a programmable structure (34), having
- a plurality of arithmetic units (50, 51) for arithmetic and/or logic linking of two operands on two input buses to produce a result on an output bus,
- a plurality of compare units (52) having two input buses and one output bit,
- a plurality of multiplexers (40,58) having a plurality of input busses and one or two output busses, which are provided between the arithmetic units (50, 51), the compare units (52) and the register file (24), as well as
- a plurality of demultiplexers (46) having one input bit and a plurality of output bits, for delivery of the results of the comparisons (CoU) in a destination selection to corresponding arithmetic units (50, 51),
- a multiplex-controlled s-paradigm unit (s-unit) (30, 34, 32, 24) which contains the integer resister file (24) and the functional unit with a programmable structure (34) and is designed to link the contents of the integer register file (24) and the functional unit with the programmable structure (34) and has a large number of data links that are connected by multiplexers, with the s-unit (30, 34, 32, 24) being provided with a programmable hardware structure for dynamic reconfiguration/ programming while the programme is running, and
- a programmable structure buffer (30) for temporary storage of configuration bits for the s-unit (30, 34, 32, 24).

2. Processor according to Claim 1,
**characterized by**
a floating point register file having appropriate links as or in addition to the register file (24).

3. Processor according to one of the preceding claims,
**characterized in that**
the functionality of the arithmetic units (50, 51) and compare units (52) is configurable and programmable dynamically, while the programme is running, for in each case one block of commands.

4. Method for high-speed calculation with pipelining processors according to one of the preceding claims,
**characterized in that**
- for the s-unit (30, 34, 32, 24), after forming a block which is as large as possible in the course of assembler coding and introduction of conditioned commands, which are executed or jumped over on the basis of "decision" bits, configuration bits are produced,
- the configuration bits for the subunits of the functional unit with a programmable structure (34) are buffer-stored and are loaded into the s-unit (30, 34, 32, 24) during processing of the block,
the decision bits being defined by comparisons such that they govern the control flow, so that an optimum data flow translation is produced, in conjunction with the compare units (52), when an arithmetic unit (50, 51) is used as a dynamic multiplexer.

## Revendications

1. Processeur avec une structure en pipeline, en particulier avec une architecture superscalaire, avec une mémoire d'instruction (16), une unité de décodage (18), un tampon d'instruction à nombres entiers/adresse (32) et un fichier de registres à nombres entiers (24) pour la communication directe avec des moyens d'interface (36) mémorisant les données,
**caractérisé par**
- une unité fonctionnelle ayant une structure programmable (34), avec
- une pluralité d'unités arithmétiques (50, 51) pour l'opération arithmétique et/ou logique de deux opérandes sur deux bus d'entrée menant à un résultat sur un bus de sortie,
- une pluralité d'unités de comparaison (52) avec deux bus d'entrée et un bit de sortie,
- une pluralité de multiplexeurs (40, 58) avec une pluralité de bus d'entrée et un ou deux bus de sortie, qui sont prévus entre les unités arithmétiques (50, 51), les unités de comparaison (52) et le fichier de registres (24), ainsi
- qu'une pluralité de démultiplexeurs (46) avec un bit d'entrée et une pluralité de bits de sortie, en vue de livrer le résultat des comparaisons (CoU) dans une sélection de destination à des unités arithmétiques appropriées (50, 51),
- et une unité à paradigme s (unité s) (30, 34, 32, 24) commandée en multiplex, contenant le fichier des registres à nombres entiers (24) et l'unité fonctionnelle ayant une structure programmable (34), exécutée pour combiner les contenus du fichier des registres à nombres entiers (24) et de l'unité fonctionnelle ayant une structure programmable (34), avec une pluralité de liaisons de données reliées par des multiplexeurs, l'unité s (30, 34, 32, 24) étant munie d'une structure matérielle programmable pour une nouvelle configuration/programmation dynamique pendant la durée d'exécution du programme, et
- un tampon à structure programmable (30) pour la mémorisation intermédiaire de bits de configuration destinés à l'unité s (30, 34, 32, 24).

2. Processeur selon la revendication 1,
**caractérisé par**
un fichier de registres à virgule flottante avec des combinaisons appropriées en tant que fichier des registres (24) ou en complément au fichier des registres (24).

3. Processeur selon l'une quelconque des revendications précédentes,
**caractérisé en ce que**
les unités arithmétiques (50, 51) et les unités de comparaison (52) pendant l'exécution du programme sont configurables et programmables de façon dynamique dans leur fonctionnalité pour respectivement un bloc d'instructions.

4. Procédé pour le calcul à vitesse élevée avec des processeurs en pipeline selon l'une quelconque des revendications précédentes,
**caractérisé en ce que**
- des bits de configuration sont produits pour l'unité s (30, 34, 32, 24) après la formation de blocs les plus grands possibles dans le cadre du codage en assembleur et de l'introduction d'instructions conditionnelles, qui sont exécutées ou ignorées en fonction de bits de décision,
- les bits de configuration pour les unités partielles de l'unité fonctionnelle ayant une structure programmable (34) sont mémorisés de façon intermédiaire et sont chargés dans l'unité s (30, 34, 32, 24) lors du traitement du bloc,
les bits de décision étant fixés d'une façon qui détermine le flux de commande, par des comparaisons, de sorte que lorsqu'on emploie une unité arithmétique (50, 51) en tant que multiplexeur dynamique, on produit alors une traduction optimale du flux de données en liaison avec les unités de comparaison (52).
